# EUROPEAN PATENT APPLICATION

(11) **EP 4 823 127 A1**
(43) Date of publication of application: **14.10.2026**
(21) Application number: 23960478.8
(22) Date of filing: 05.12.2023
(51) Int. Cl.: H04W 4/18

(54) **COMMUNICATION METHOD AND DEVICE**

(71) Applicant: GUANGDONG OPPO MOBILE TELECOMMUNICATIONS CORP., LTD., Dongguan, Guangdong 523860 (CN)
(72) Inventor: DU, Zhongda, Dongguan, Guangdong 523860 (CN)
(74) Representative: Taor, Simon Edward William
(86) International application number: PCT/CN2023/136578
(87) International publication number: WO 2025/118164

(57) **Abstract**

This disclosure relates to a communication method and a device. The method includes the following. A first node receives first task information. The first node transforms the first task information into second task information. The first node sends the second task information. According to the embodiments of the present disclosure, the executability of task information can be improved by transforming task information.

## Description

### TECHNICAL FIELD

This disclosure relates to the field of communication, and specifically to a communication method and a device.

### BACKGROUND

With the development of Internet of thing (IoT) technology, IoT terminals have a wide range of application scenarios and a huge quantity. In an Ambient IoT (A-IoT) communication system, the energy of an A-IoT terminal may come from the surrounding environment, and this type of terminals usually has relatively simple functions. A common terminal, such as a terminal installed with an application program, is difficult to control this type of terminal whose energy comes from the surrounding environment.

### SUMMARY

Embodiments of the disclosure provide a communication method and a device, which can improve the executability of task information.

Embodiments of the disclosure provide a communication method, which includes the following. A first node receives first task information. The first node transforms the first task information into second task information. The first node sends the second task information.

Embodiments of the disclosure provide a communication method, which includes the following. A second node receives second task information, where the second task information is obtained by transforming based on the first task information. The second node transforms the second task information into third task information. The second node sends the third task information.

Embodiments of the disclosure provide a first communication device, which includes a receiving unit, a processing unit, and a sending unit. The receiving unit is configured to receive first task information. The processing unit is configured to transform the first task information into second task information. The sending unit is configured to send the second task information.

Embodiments of the present disclosure provide a second communication device, which includes a receiving unit, a processing unit, and a sending unit. The receiving unit is configured to receive second task information, where the second task information is obtained by transforming based on first task information. The processing unit is configured to transform the second task information into third task information. The sending unit is configured to send the third task information.

Embodiments of the disclosure provide a communication device, which includes a transceiver, a processor, and a memory. The memory is configured to store a computer program. The transceiver is configured to communicate with another device. The processor is configured to invoke and execute the computer program stored in the memory, to cause the communication device to perform the above communication method.

Embodiments of the present disclosure provide a chip, which is configured to perform the above communication method. Specifically, the chip includes a processor. The processor is configured to invoke and execute a computer program stored in a memory, to cause a device equipped with the chip to perform the above communication method.

Embodiments of the present disclosure provide a computer-readable storage medium configured to store a computer program which, when executed by a device, causes the device to perform the above communication method.

Embodiments of the disclosure provide a computer program product including computer program instructions, which are executable by a computer to perform the above communication method.

Embodiments of the present disclosure provide a computer program which, when executed by a computer, causes the computer to perform the above communication method.

According to the embodiments of the present disclosure, the executability of task information can be improved by transforming task information.

### BRIEF DESCRIPTION OF THE DRAWINGS

FIG. 1 is a schematic diagram of an application scenario to which the embodiments of the present disclosure are applicable.
FIG. 2A is a schematic structural diagram of basic compositions of an ambident Internet of thing (A-IoT) communication system.
FIGS. 2B-1 to 2B-4 are schematic diagrams of network topologies.

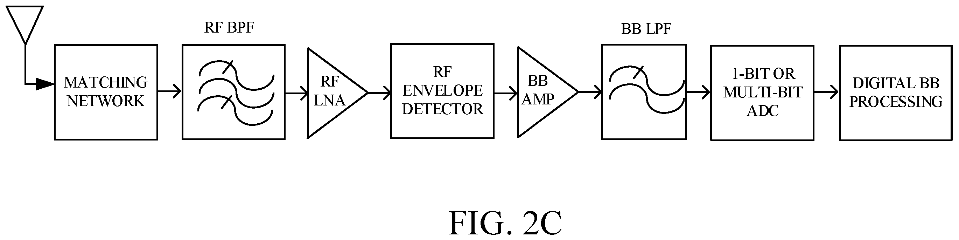

FIG. 2C is a schematic structural diagram of a wideband receiver.

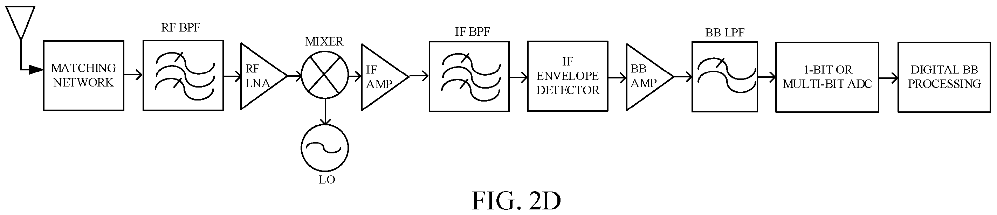

FIG. 2D is a schematic structural diagram of a narrowband receiver.

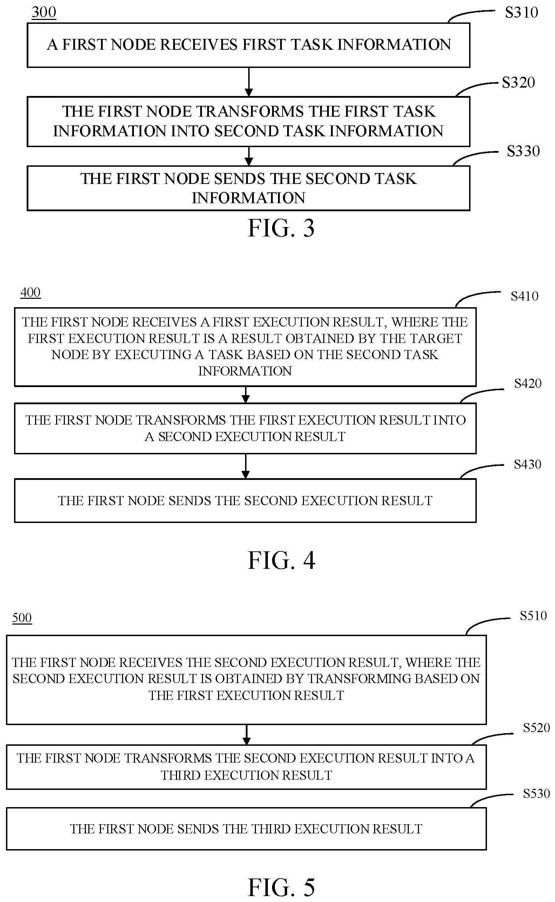

FIG. 3 is a schematic flowchart of a communication method according to an embodiment of the disclosure.
FIG. 4 is a schematic flowchart of a communication method according to another embodiment of the disclosure.
FIG. 5 is a schematic flowchart of a communication method according to another embodiment of the disclosure.

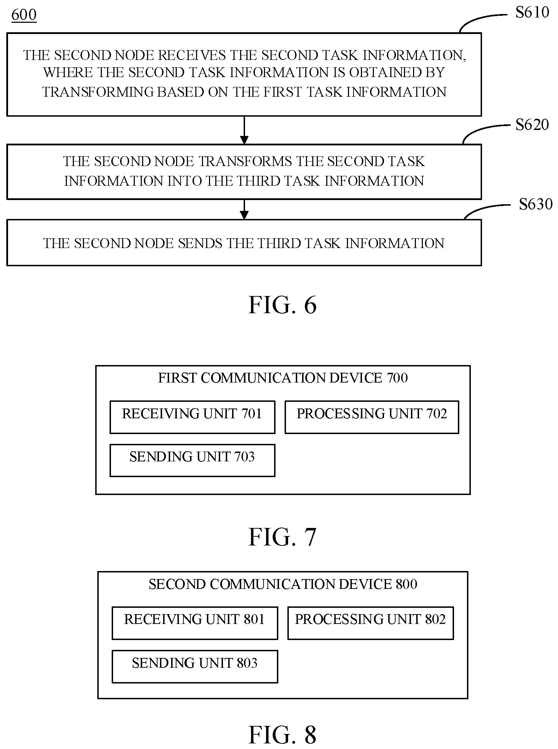

FIG. 6 is a schematic flowchart of a communication method according to an embodiment of the disclosure.
FIG. 7 is a schematic block diagram of a first communication device according to an embodiment of the disclosure.
FIG. 8 is a schematic block diagram of a second communication device according to an embodiment of the disclosure.

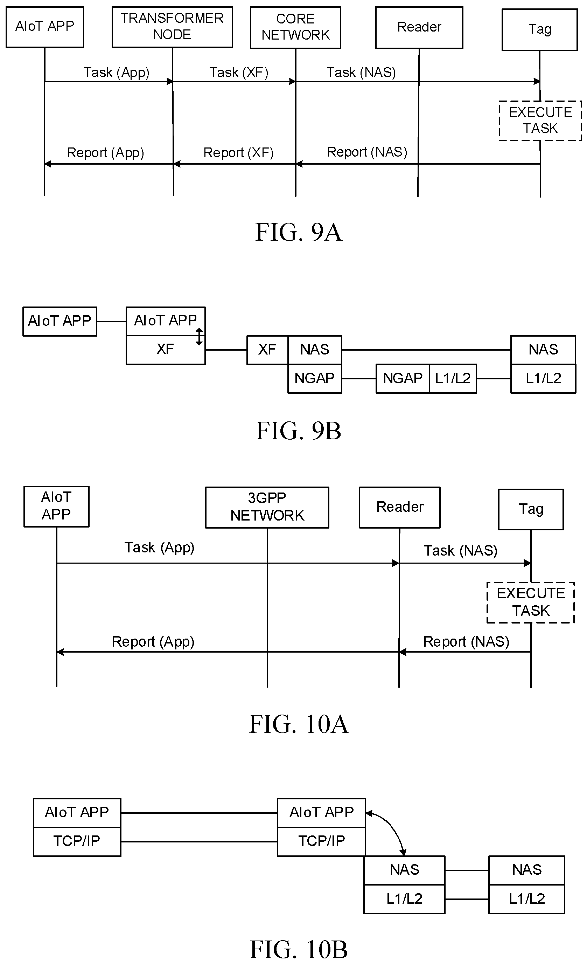

FIGS. 9A and 9B are schematic flowcharts of a remote transformer-based method.
FIGS. 10A and 10B are schematic flowcharts of a local transformer-based method.

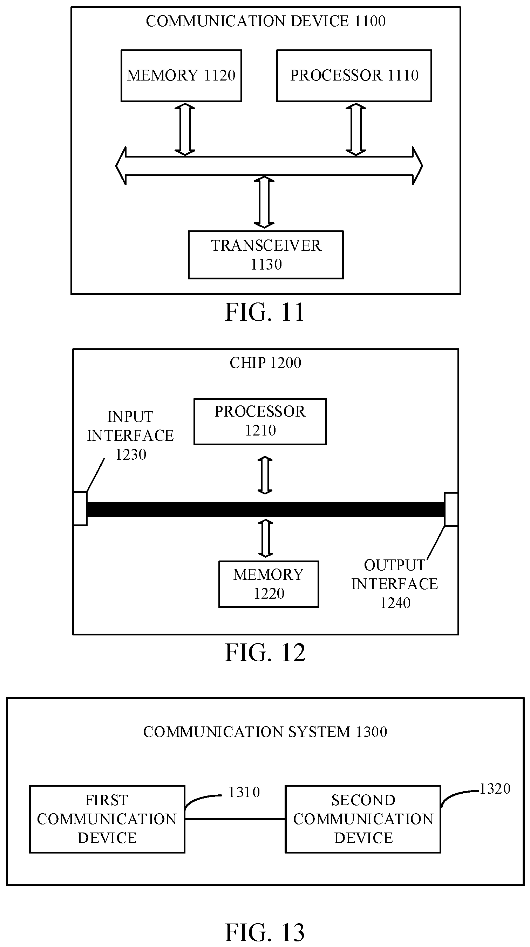

FIG. 11 is a schematic block diagram of a communication device according to the embodiments of the disclosure.
FIG. 12 is a schematic block diagram of a chip according to the embodiments of the disclosure.
FIG. 13 is a schematic block diagram of a communication system according to the embodiments of the disclosure.

### DETAILED DESCRIPTION

The following will describe technical solutions of embodiments of the disclosure with reference to the accompanying drawings in embodiments of the disclosure.

The technical solutions in embodiments of the disclosure are applicable to various communication systems, for example, a long term evolution (LTE) system, an advanced LTE (LTE-A) system, a new radio (NR) system, an evolved system of an NR system, an LTE-based access to unlicensed spectrum (LTE-U) system, an NR-based access to unlicensed spectrum (NR-U) system, a non-terrestrial network (NTN) system, a universal mobile telecommunication system (UMTS), a wireless local area network (WLAN), a wireless fidelity (Wi-Fi), a 5th generation (5G) system, or other communication systems.

Generally speaking, a conventional communication system generally supports a limited quantity of connections and therefore is easy to implement. However, with development of communication technology, a mobile communication system will not only support conventional communication but also support, for example, device to device (D2D) communication, machine to machine (M2M) communication, machine type communication (MTC), vehicle to vehicle (V2V) communication, vehicle to everything (V2X) communication, etc. Embodiments of the disclosure can also be applied to these communication systems.

In an embodiment, a communication system in embodiments of the disclosure may be applied to a carrier aggregation (CA) scenario, a dual connectivity (DC) scenario, or a standalone (SA) network deployment scenario.

In an embodiment, the communication system in implementations of the disclosure is applicable to an unlicensed spectrum, and an unlicensed spectrum may be regarded as a shared spectrum. Or the communication system in embodiments of the disclosure is applicable to a licensed spectrum, and a licensed spectrum may be regarded as a non-shared spectrum.

Various embodiments of the disclosure are described in connection with a network device and a terminal device. The terminal device may also be referred to as a user equipment (UE), an access terminal, a subscriber unit, a subscriber station, a mobile station, a remote station, a remote terminal, a mobile device, a user terminal, a terminal, a wireless communication device, a user agent, a user device, etc.

The terminal device may be a station (ST) in a WLAN, a cellular radio telephone, a cordless telephone, a session initiation protocol (SIP) telephone, a wireless local loop (WLL) station, a personal digital assistant (PDA), a handheld device with wireless communication functions, a computing device, other processing devices coupled with a wireless modem, an in-vehicle device, a wearable device, and a terminal device in a next-generation communication system, for example, a terminal device in an NR network, a terminal device in a future evolved public land mobile network (PLMN), etc.

In embodiments of the disclosure, the terminal device can be deployed on land, which includes indoor or outdoor, handheld, wearable, or in-vehicle. The terminal device can also be deployed on water (such as ships, etc.). The terminal device can also be deployed in the air (such as airplanes, balloons, satellites, etc.).

In embodiments of the disclosure, the terminal device can be a mobile phone, a pad, a computer with wireless transceiver functions, a virtual reality (VR) terminal device, an augmented reality (AR) terminal device, a wireless terminal device in industrial control, a wireless terminal device in self-driving, a wireless terminal device in remote medicine, a wireless terminal device in smart grid, a wireless terminal device in transportation safety, a wireless terminal device in smart city, a wireless terminal device in smart home, etc.

By way of explanation rather than limitation, in embodiments of the disclosure, the terminal device may also be a wearable device. The wearable device may also be called a wearable smart device, which is a generic term of wearable devices obtained through intelligentization design and development on daily wearing products with wearable technology, for example, glasses, gloves, watches, clothes, accessories, and shoes. The wearable device is a portable device that can be directly worn or integrated into clothes or accessories of a user. In addition to being a hardware device, the wearable device can also realize various functions through software support, data interaction, and cloud interaction. A wearable smart device in a broad sense includes, for example, a smart watch or smart glasses with complete functions and large sizes and capable of realizing independently all or part of functions of a smart phone, and for example, various types of smart bands and smart jewelries for physical monitoring, of which each is dedicated to application functions of a certain type and required to be used together with other devices such as a smart phone.

In embodiments of the disclosure, the network device may be a device configured to communicate with a mobile device, and the network device may be an access point (AP) in a WLAN, an evolutional Node B (eNB or eNodeB) in LTE, or a relay station or AP, or an in-vehicle device, a wearable device, a network device (gNB) in an NR network, a network device in a future evolved PLMN, a network device in an NTN, etc.

By way of explanation rather than limitation, in embodiments of the disclosure, the network device may be mobile. For example, the network device may be a mobile device. Optionally, the network device may be a satellite or a balloon base station. For example, the satellite may be a low earth orbit (LEO) satellite, a medium earth orbit (MEO) satellite, a geostationary earth orbit (GEO) satellite, a high elliptical orbit (HEO) satellite, etc. Optionally, the network device may also be a base station deployed on land or water.

In embodiments of the disclosure, the network device provides services for a cell, and the terminal device communicates with the network device on a transmission resource (for example, a frequency-domain resource or a spectrum resource) for the cell. The cell may be a cell corresponding to the network device (for example, a base station). The cell may correspond to a macro base station, or may correspond to a base station corresponding to a small cell. The small cell may include: a metro cell, a micro cell, a pico cell, a femto cell, and the like. These small cells are characterized by small coverage and low transmission power and are adapted to provide data transmission service with high-rate.

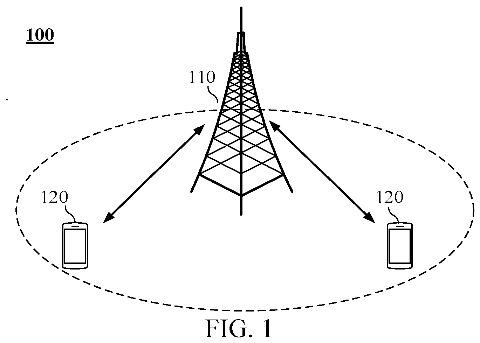

FIG. 1 exemplarily illustrates a communication system 100. The communication system includes one network device 110 and two terminal devices 120. In an implementation, the communication system 100 may include multiple network devices 110, and there may be other numbers of terminal devices 120 within the coverage of each network device 110. Embodiments of the disclosure are not limited in this regard.

In an implementation, the communication system 100 may further include other network entities such as a mobility management entity (MME) and an access and mobility management function (AMF). Embodiments of the disclosure are not limited in this regard.

The network device may include an access network device and a core network device, that is, the wireless communication system further includes multiple core networks for communicating with the access network device. The access network device may be an evolutional node B (eNB or e-NodeB), a macro base station, a micro base station (also referred to as a "small base station"), a pico base station, an access point (AP), a transmission point (TP), or a new generation Node B (gNodeB) in a long-term evolution (LTE) system, a next radio (NR) system, an authorized auxiliary access long-term evolution (LAA-LTE) system, etc.

It should be understood that, in embodiments of the disclosure, a device with communication functions in a network or system may be referred to as a communication device. For example, as illustrated in FIG. 1, the communication device may include a network device and a terminal device with communication functions. The network device and the terminal device may be the specific devices in embodiments of the disclosure, which will not be repeated herein. The communication device may further include other devices in the communication system, such as a network controller, a mobility management entity, or other network entities. Embodiments of the disclosure are not limited in this regard.

It should be understood that, the terms "system" and "network" herein are usually used interchangeably throughout this disclosure. The term "and/or" herein only describes an association relationship between associated objects, which means that there can be three relationships. For example, A and/or B can mean A alone, both A and B exist, and B alone. In addition, the character "/" herein generally indicates that the associated objects are in an "or" relationship.

It should be understood that, "indication" referred to in embodiments of the disclosure may be a direct indication, may be an indirect indication, or may mean that there is an association relationship. For example, A indicates B may mean that A directly indicates B, for instance, B can be obtained according to A; may mean that A indirectly indicates B, for instance, A indicates C, and B can be obtained according to C; or may mean that that there is an association relationship between A and B.

In the elaboration of embodiments of the disclosure, the term "correspondence" may mean that there is a direct or indirect correspondence between the two, may mean that there is an association between the two, or may mean a relationship of indicating and indicated, configuring and configured, etc.

In order for better understanding of technical solutions of embodiments of the disclosure, technologies related to the embodiments of the disclosure will be elaborated below. The following related art as an optional scheme can be arbitrarily combined with the technical solutions of embodiments of the disclosure, which shall all belong to the protection scope of embodiments of the disclosure.

The rise of Internet of thing (IoT) technology poses new challenges to communication systems. IoT terminals may be used in scenarios such as logistics, warehousing, factory automation, animal husbandry, etc. These IoT terminals only need to perform intermittent simple communication or rough positioning and tracking with the network. In the current market, even the simplest IoT terminal, such as a narrow band (NB)-IoT terminal used for coal meter metering and electricity meter metering, requires a battery to provide energy. Although the power consumption is extremely low, the batteries inside these IoT terminals will be depleted after several years at most. As a result, replacing batteries requires a significant amount of labor. Moreover, some industrial scenarios are too dangerous and not suitable for manual operation. Therefore, battery-free IoT terminals have emerged as the times require.

These battery-free IoT terminals are large in quantity and low in cost, and generally do not require manual maintenance after installation. Radio frequency identification (RFID) terminals can satisfy the above demand to a certain extent. Nevertheless, the operation of an RFID system itself still requires manual involvement (for example, it is necessary to manually hold a reader). Moreover, since the wireless coverage range of a single RFID reader is limited (within 10 meters), a lot of manpower, material resources and time are still required, for example, when inventorying goods in a large supermarket.

Migrating the RFID communication system or the like into a 3GPP cellular network can well solve the coverage problem. This is because deployed cellular networks, such as 4G and 5G networks, have achieved full nationwide coverage or at least coverage of major cities in China, Europe and the United States. The advantage of full coverage is that the communication process or positioning process between the IoT terminals and the network does not require manual involvement, so these IoT devices can operate 24/7 without interruption and with high efficiency even in environments unsuitable for human presence (such as wilderness areas, mining sites, factories). In this way, except for the initial association between an IoT terminal and a specific object, subsequent data reading, writing, and maintenance can be handled through an application (APP) on a smartphone, for example, making the processes extremely convenient and efficient.

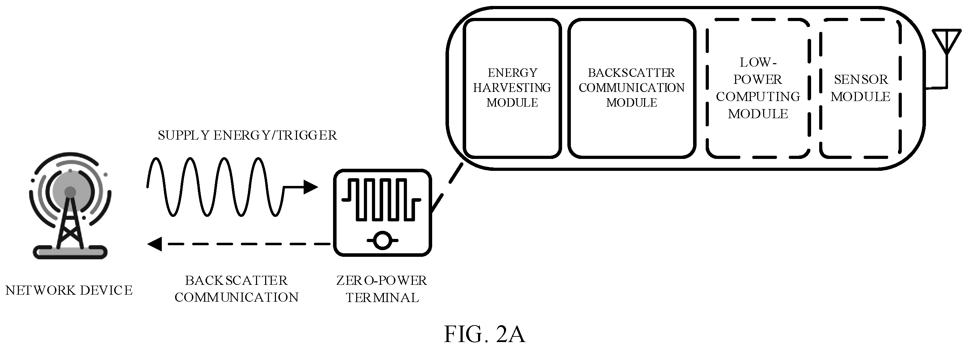

Such a communication system is called an ambident Internet of thing (A-IoT) communication system or a zero-power communication system. The A-IoT communication adopts energy harvesting technology and backscatter communication technology. As illustrated in FIG. 2A, an A-IoT communication network includes a network device and an A-IoT terminal (for example, a tag node, which is also referred to as a tag). The network device is configured to send a wireless power supply signal and a downlink communication signal to the tag or a zero-power terminal, and is further configured to receive a backscatter signal from the tag or the zero-power terminal. A basic tag or zero-power terminal includes an energy harvesting module, a backscatter communication module and a low-power computing module. In addition, the tag or zero-power terminal may further include a memory for storing some basic information (such as item identification, etc.), or include a sensor for obtaining sensing data such as ambient temperature and ambient humidity.

The 3GPP working group 1 (SA1) has already categorized and discussed use cases that such a system can support, including four major categories: inventory, sensor, tracking, and command. Inventory refers to checking for missing or additional goods when goods enter or leave a warehouse. Common sensors include temperature sensors, pressure sensors, humidity sensors and other sensors, which are used in scenarios such as industry, agriculture and smart cities. Information collected by these sensors is uploaded through an A-IoT system to a third-party App for monitoring and management. Tracking generally refers to irregularly obtaining the approximate location of an object. For example, users can know the location of their own express delivery in almost real time through a smartphone. Command refers to operating a certain servomechanism through the A-IoT communication system. These servomechanisms are connected to A-IoT terminals. For example, during work breaks in the office, a user can water flowers and plants in the backyard through a mobile phone App, where the watering servomechanism is connected to a certain A-IoT terminal.

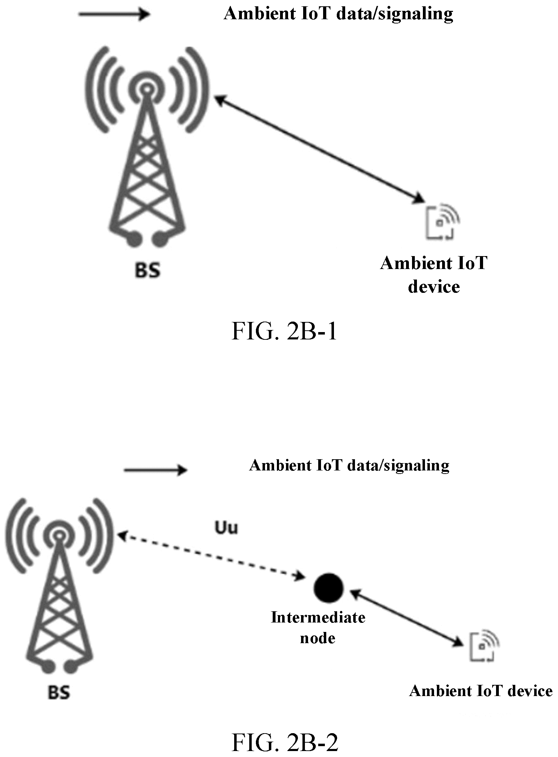

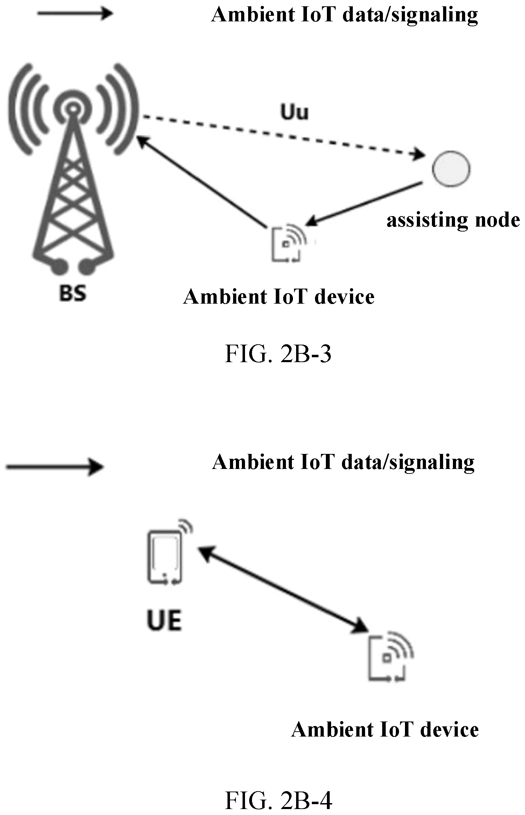

The 3GPP has also studied these SA1 use cases from a wireless perspective, and proposed four topological network structures, three terminal types, and designed functional and performance objectives. Examples of zero-power IoT data/signaling (also referred to as A-IoT data/signaling) transmission in these network topologies are as follows. As illustrated in FIG. 2B-1, a tag, such as a zero-power IoT device (also referred to as A-IoT device), directly communicates with a base station (BS). As illustrated in FIG. 2B-2, a tag directly communicates with an intermediate node, which may be a smartphone. The communication link between the intermediate node and the base station may be established based on an existing communication system, such as 5G NR. As illustrated in FIG. 2B-3, a tag is connected to a base station through an uplink, and is connected to an assisting node through a downlink. The communication link between the assisting node and the base station may be established based on an existing communication system, such as 5G NR. As illustrated in FIG. 2B-4, a tag directly communicates with a user equipment (UE).

The energy of an A-IoT terminal (tag) comes from the surrounding environment, such as radio frequency (RF), solar energy, thermal energy, mechanical vibration, wind energy, etc. In an A-IoT system currently studied by 3GPP, terminals are mainly divided into three types as follows: type A, type B and type C. Among the three types, type A terminals and type B terminals can only communicate by reflecting and modulating received radio waves, and this communication method is called back-scattering. That is to say, type A terminals and type B terminals cannot actively send radio signals, and power of type A terminals and type B terminals is in the range of 1~10 microwatts (µW). Type A terminals have the lowest transmission power and the lowest hardware complexity, which are basically close to the level of RFID terminals. Type B terminals have slightly more complex hardware, such as signal amplification devices, and have certain energy storage devices, so Type B terminals have a longer communication distance with the network than type A terminals. Type C terminals have the ability to actively send radio waves, with a transmission power of approximately 1~10 milliwatts (mW), and can store a certain amount of energy. All three types of terminals can harvest energy from the environment and can operate continuously for several years or more than 10 years. To save energy, type A terminals and type B terminals are basically in a dormant state before the network triggers the communication process. Type A terminals and type B terminals will wake up to work only after being activated by a wireless signal from the network.

Receivers of tags may include two major types as follows.

Receiver type 1 is a wideband receiver. The wideband receiver is also called an RF receiver, which obtains signals within a bandwidth range to be received based on an RF band-pass filter (BPF), and then performs envelope detection and subsequent baseband (BB) processing. This structure is the simplest, and the power consumption can be as low as several µW or even lower. However, due to the relatively poor precision of the RF BPF, even when the target signal occupies a narrow bandwidth, the receiver often receives signals within a wider bandwidth. Therefore, a significant amount of noise and interference are introduced during the receiving process, which results in poor receiver performance, that is, poor sensitivity. FIG. 2C is a structural diagram of a wideband receiver. For example, a wideband receiver may include a matching network, an RF BPF, an RF low-noise amplifier (LNA), an RF envelope detector, a BB amplifier (AMP), a BB low-pass filter (LPF), a 1-bit or multi-bit analog-to-digital converter (ADC), and digital BB processing.

Receiver type 2 is a narrowband receiver. For example, an intermediate frequency receiver or a zero-intermediate frequency receiver. In signal reception, in addition to using the RF BPF to obtain signals within the bandwidth range to be received, down-conversion is performed on RF signals, and filtering is performed on baseband signals using a low-pass filter to further filter noise and interference. Therefore, the narrowband receiver has a narrow receiving bandwidth and good receiving performance, that is, high receiver sensitivity. However, the narrowband receiver requires a local oscillator (LO), and even a recommended LO consumes 100µW or even higher power. Therefore, the power consumption of the narrowband receiver is relatively high. However, since the absolute power consumption of the narrowband receiver is extremely low, the narrowband receiver is still suitable for zero-power devices. FIG. 2D is a structural diagram of an intermediate frequency (IF) receiver. The IF receiver may include a matching network, an RF BPF, an RF LNA, a mixer, an LO, an IF AMP, an IF envelope detector, a BB AMP, a BB LPF, a 1-bit or multi-bit ADC, and digital BB processing.

The aforementioned type A terminals usually adopt wideband receivers, type C terminals usually adopt narrowband receivers, and type B terminals may adopt either or both types of receivers.

In 3GPP broadband systems, such as long term evolution (LTE) and new radio (NR) systems, main terminal forms may be a smart terminal or a smart wearable electronic product. Such an electronic product generally has a complete protocol stack from top to bottom for communicating between Apps and the Internet (such as a transmission control protocol/Internet protocol (TCP/IP), etc.), and a 3GPP communication module for sending and receiving IP data blocks. For an A-IoT system, neither the cost (directly related to complexity/computing capability) nor the energy storage of the hardware of a tag can support the operation of the above complex application software.

In the RFID system, after a point-to-point communication link is established between a tag and a reader, the main operations performed by the reader on the tag are read and write operations on the logical memory of the tag. Interpretation of the read and write content is completed by the reader or an application on a server connected to the reader.

For the A-IoT system, some use cases are similar to use cases in the RFID system, such as inventory work needed to be completed. However, the A-IoT system needs to support more use cases, which includes sensor use cases, tracking use cases, and command use cases. The sensor use cases require completing a certain measurement task and reporting measured data to a network in a certain manner. The tracking use cases refer to that the network needs to know the approximate location of the tag through a certain manner. When the requirement for position accuracy is relatively high, for example, when it is necessary to know which corner of a room a certain tag is in, the tag may need to send a radio signal for positioning. The command use cases refer to that the network needs to send certain content to a tag, so as to further control certain servomechanisms through the tag, such as an air conditioner for temperature control, etc.

Among the above new use cases, for example, if a tag is a communication module on a certain sensor, the sensor needs to know what measurements the network requires the sensor to perform and how to report results of the measurements. However, the issuance of the measurement tasks and the reporting of the results cannot be directly completed through an App layer, and need to be transformed within the communication system.

FIG. 3 is a schematic flowchart of a communication method 300 according to an embodiment of the disclosure. The method may optionally be applied to the system illustrated in FIG. 1, but is not limited thereto. The method includes at least part of the following.

S310, a first node receives first task information.

S320, the first node transforms the first task information into second task information.

S330, the first node sends the second task information.

In embodiments of the disclosure, task information of some sending nodes needs to be transformed before being executed by receiving nodes. For example, the sending nodes may include a mobile terminal, a server, etc., and an App may be installed in the mobile terminal or the server. The receiving nodes may include a low-power terminal or a zero-power terminal with simple functions. The low-power terminal or the zero-power terminal is mainly used for performing simple operations such as receiving, sending, reading, writing, comparing, and deleting according to received task information. The first node may be a transformer node in a communication system. The first node may receive the first task information from a sending node, and transform the first task information according to a relevant protocol to obtain the second task information. A parameter of a task in the first task information and a parameter of the task in the second task information may be the same or similar, but the information format of the first task information and the information format of the second task information may comply with different protocols. In one case, the second task information may comply with a protocol executable by a receiving node. In another case, the second task information complies with a protocol of an intermediate node, and needs to be transformed by the intermediate node to comply with the protocol executable by the receiving node. In some examples, the first task information and the second task information may be information of an A-IoT task. By transforming the task information, the executability of task information can be improved.

In an implementation, the first task information and/or the second task information indicates a parameter of a task to be executed by a target node. In embodiments of the disclosure, the sending node may be a source node, and the receiving node may be the target node. The first task information sent by the source node, such as an application node, may explicitly or implicitly indicate the parameter of the task to be executed by the target node. The first node may transform the first task information from the source node into the second task information. The format of the second task information is different from the format of the first task information. For example, the first task information is application-layer information, and the second task information is protocol-layer information. For another example, the first task information is application-layer information, and the second task information is non-access stratum (NAS) information. The second task information may also explicitly or implicitly indicate the parameter of the task to be executed by the target node.

In an implementation, the parameter of the task to be executed by the target node include at least one of the following:
content of the task;
a period of the task;
a reporting manner of an execution result;
a control parameter of the execution result; or
an execution range of the task.

In embodiments of the disclosure, the content of the task may be varied and may differ depending on the scenario in which the target node is set. For example, if the target node is a switch control node set on a lamp, the content of the task may be turning on the lamp, turning off the lamp, etc. If the target node is a control node set on a temperature sensor or a humidity sensor, the content of the task may be measuring temperature, measuring humidity, etc. If the target node is an inventory node set on a commodity, the content of the task may be reporting the identification of the commodity, etc.

In embodiments of the disclosure, if the task is an instantly triggered task, there may be no period. If the task is a periodically executed task, the period of the task may be set according to the scenario where the target node is set, the content of the task, etc. For example, if the target node is a control node set on a temperature sensor, the content of the task is measuring temperature, and the period of the task is 1 hour, which indicates that the target node is required to measure and report the ambient temperature every hour.

In embodiments of the disclosure, the reporting manner of the execution result may be flexibly set as needed. The execution result may be reported immediately after measurement. The execution result may be reported periodically, for example, once a day, once every 1 hour, etc. The execution result may be reported when a certain condition is satisfied, for example, when the temperature is greater than 35 degrees Celsius. The control parameter of the execution result may include a threshold or a threshold range for result reporting, etc. The execution range of the task may include a location range where the target node executing the task is located, etc.

In an implementation, the target node includes a tag node. For example, in an A-IoT system, the target node may be a tag.

FIG. 4 is a schematic flowchart of a communication method 400 according to another embodiment of the disclosure. The method 400 may include one or more features of the above method. In an implementation, the first node is the transformer node, and S310 includes the following. The transformer node receives the first task information from the application node, where the first task information is the application-layer information. The transformer node may receive the application-layer first task information (i.e. the first task information in the application layer) from the source node, such as the application node. The first task information may be directly transmitted between the first node and the source node, or may be transmitted between the first node and the source node through the Internet or other manners.

In an implementation, the transformer node may be on a reader node, or may be set independently of the reader node.

In an implementation, S330 includes the following. The transformer node sends the second task information to the target node, where the second task information is NAS information obtained by the transformer node by transforming the first task information from the application-layer information. In embodiments of the disclosure, after the transformer node transforms the application-layer first task information into the NAS second task information (i.e. the second task information in the NAS), the transformer node may directly send the NAS second task information to the target node, or may send the NAS second task information to the target node through another node, such as a reader node (also referred to as a reader). The second task information may be transmitted between the transformer node (or the reader node) and the target node via a layer 1/layer 2 (L1/L2) message.

In an implementation, the method further includes the following.

S410, the first node receives a first execution result, where the first execution result is a result obtained by the target node by executing a task based on the second task information.

S420, the first node transforms the first execution result into a second execution result.

S430, the first node sends the second execution result.

In embodiments of the disclosure, after receiving the NAS second task information, the target node may execute the task based on the second task information to obtain the first execution result, and send the first execution result to the first node. The first node may directly receive the first execution result from the target node, or receive the first execution result from the target node through the reader node. The first execution result may be transmitted between the transformer node (or the reader node) and the target node via an L1/L2 message. The first node may transform the first execution result into the second execution result according to a protocol. The first execution result and the second task information may comply with the same protocol, and the second execution result and the first task information may comply with the same protocol. After that, the first node may send the second execution result to the source node. The task execution result may be directly transmitted between the first node and the source node, or may be transmitted between the first node and the source node through the Internet or other manners.

In an implementation, the first node receives the first execution result as follows. The transformer node receives the first execution result from the target node, where the first execution result is NAS information. In embodiments of the disclosure, after executing the NAS second task information and obtaining the NAS first execution result (i.e. the first execution result in the NAS), the target node may send the first execution result to the transformer node. The transformer node may transform the NAS first execution result into an application-layer second execution result (i.e. a second execution result in the application layer).

In an implementation, the first node sends the second execution result as follows. The transformer node sends the second execution result to the application node through a communication network, where the second execution result is application-layer information obtained by the transformer node transforming the first execution result from the NAS information. In embodiments of the disclosure, the transformer node may send the application-layer second execution result to the application node. The application node may display the second execution result on a display page of an application program.

In an implementation, the application-layer information is transmitted between the transformer node and the application node via a TCP/IP, and the NAS information is transmitted between the transformer node and the target node via an L1/L2 message. For example, a message may be transmitted between the transformer node and the application node through a 3GPP network based on the TCP/IP. The application node may send the application-layer first task information to the transformer node through the 3GPP network based on the TCP/IP. After transforming the first task information to obtain the NAS second task information, the transformer node may send the second task message to the target node via the L1/L2 message. After executing the second task information to obtain the NAS first execution result, the target node may send the first execution result to the transformer node via the L1/L2 message. After transforming the first execution result to obtain the application-layer second execution result, the transformer node may send the second transformation result to the application node through the 3GPP network based on the TCP/IP.

FIG. 5 is a schematic flowchart of a communication method 500 according to another embodiment of the disclosure. The method 500 may include one or more features of the above method. In an implementation, the first node is the transformer node, and S310 includes the following. The transformer node receives the first task information from the application node, where the first task information is the application-layer information. The transformer node may receive the application-layer first task information from the source node, such as the application node. The first task information may be directly transmitted between the first node and the source node, or may be transmitted between the first node and the source node through the Internet or other manners.

In an implementation, S330 includes the following. The transformer node sends the second task information to a core network node, where the second task information is protocol-layer information obtained by the transformer node by transforming the first task information from the application-layer information. The second task information is transformed from the protocol-layer information into the NAS information by the core network node, and is sent to the target node through the reader node. In embodiments of the disclosure, after transforming the application-layer first task information into the protocol-layer second task information, the transformer node may send the protocol-layer second task information to the intermediate node, such as the core network node. The core network node may transform the second task information into NAS third task information (i.e. third task information in the NAS). Furthermore, the core network node may directly send the NAS third task information to the target node, or may send the NAS third task information to the target node through another node, such as the reader node (also referred to as reader). The third task information may be transmitted between the reader node and the target node via an L1/L2 message.

In an implementation, the method further includes the following.

S510, the first node receives the second execution result, where the second execution result is obtained by transforming based on the first execution result, and the first execution result is a result obtained by the target node by executing a task based on the second task information.

S520, the first node transforms the second execution result into a third execution result.

S530, the first node sends the third execution result.

In embodiments of the disclosure, the target node may execute the third task information to obtain the NAS first execution result. The target node may send the first execution result to the reader node via the L1/L2 message. The reader node may send the first execution result to the core network node via a next generation application protocol (NGAP). The core network node may transform the first execution result into protocol-layer second execution result, and send the second execution result to the first node, such as the transformer node. After receiving the second execution result, the transformer node may transform the second execution result into the third execution result, and send the third execution result to the application node.

In an implementation, the first node receives the second execution result as follows. The transformer node receives the second execution result from the core network node, where the second execution result is the protocol-layer information obtained by the core network node by transforming the first execution result from the NAS information.

In an implementation, the first node sends the third execution result as follows. The transformer node sends the third execution result to the application node, where the third execution result is the application-layer information obtained by the transformer node by transforming the second execution result from the protocol-layer information.

In embodiments of the disclosure, after receiving the protocol-layer second execution result from the core network node based on an X functionality (XF, which also referred to as a certain function), the transformer node may transform the second execution result into the application-layer third execution result (i.e., the third execution result in the application layer), and then send the third execution result to the application node.

In an implementation, information interaction between the transformer node and the core network node is performed in a manner based on reference points under a service-based architecture (SBA), which is a manner of signaling exchange between most nodes in a 5G core network.

FIG. 6 is a schematic flowchart of a communication method 600 according to an embodiment of the disclosure. The method may optionally be applied to the system illustrated in FIG. 1, but is not limited thereto. The method includes at least part of the following.

S610, the second node receives the second task information, where the second task information is obtained by transforming based on the first task information.

S620, the second node transforms the second task information into the third task information.

S630, the second node sends the third task information.

In embodiments of the disclosure, after transforming the application-layer first task information into the protocol-layer second task information, the first node may send the second task information to the second node. The second node may transform the second task information into the third task information executable by the target node, and then send the third task information to the target node.

In an implementation, at least one of the first task information, the second task information, and the third task information indicates the parameter of the task to be executed by the target node. In embodiments of the disclosure, a parameter of a task in the first task information, a parameter of the task in the second task information, and a parameter of the task in the third task information may be the same or similar, but the information format of the first task information, the information format of the second task information, and the information format of the third task information may comply with different protocols. For example, the first task information is the application-layer information, the second task information is the protocol-layer information, and the third task information is the NAS information.

In an implementation, the parameter of the task to be executed by the target node include at least one of the following:
the content of the task;
the period of the task;
the reporting manner of an execution result;
the control parameter of the execution result; or
the execution range of the task.

In an implementation, the target node includes the tag node.

In an implementation, the second node is the core network node.

In an implementation, the second node receives the second task information as follows. The core network node receives the second task information from the transformer node, where the second task information is the protocol-layer information obtained by the transformer node by transforming the first task information from the application node, and the first task information is the application-layer information.

In an implementation, the second node sends the third task information as follows. The core network node sends the third task information to the target node through the reader node, where the third task information is the NAS information.

In embodiments of the disclosure, after receiving the protocol-layer second task information from the transformer node, the core network node may transform the second task information into the NAS third task information, and send the third task information to the target node.

In an implementation, the method further includes the following.

The second node receives the first execution result.

The second node transforms the first execution result into the second execution result.

The second node sends the second execution result.

In embodiments of the disclosure, after executing the third task information to obtain the NAS first execution result, the target node may send the first execution result to the core network node directly or through the reader node. The core network node may transform the received first execution result into the protocol-layer second execution result, and send the second execution result to the first node, such as the transformer node.

In an implementation, the second node is the core network node. The second node receives the first execution result as follows. The core network node receives the first execution result from the target node through the reader node, where the first execution result is the NAS information. In embodiments of the disclosure, after receiving the first execution result from the target node, the reader node may forward the first execution result to the core network node.

In an implementation, the second node sends the second execution result as follows The core network node sends the second execution result to the transformer node, where the second execution result is the protocol-layer information obtained by the core network node by transforming the first execution result from the NAS information. The second execution result is transformed from the protocol-layer information into the application-layer information by the transformer node and is sent to the application node. In embodiments of the disclosure, after receiving the NAS first execution result, the core network node may transform the first execution result into the protocol-layer second execution result, and send the second execution result to the transformer node.

In an implementation, information interaction between the transformer node and the core network node is performed in a manner based on reference points under an SBA.

In an implementation, the NAS information is transmitted between the core network node and the reader node via the NGAP, and the NAS information is transmitted between the reader node and the target node via the L1/L2 message. In embodiments of the disclosure, the core network node may send the second task information to the reader node via the NGAP. After transforming the second task information into the NAS third task information, the third task information may be sent to the target node via the L1/L2 message. After executing the third task information, the target node may obtain the NAS first execution result, and send the first execution result to the core network node directly or indirectly. For example, the target node may send the first execution result to the reader node via the L1/L2 message, and the reader node sends the first execution result to the core network node based on the NGAP. The core network node may transform the received first execution result into the protocol-layer second execution result, and send the second execution result to the transformer node based on the XF. The transformer node may transform the second execution result into the application-layer third execution result, and send the third execution result to the application node.

For specific examples of the communication method 600 executed by the second node in the embodiment, reference may be made to the relevant description of the core network node in the above communication methods 300, 400, and 500, which are not repeated herein for brevity.

FIG. 7 is a schematic block diagram of a first communication device 700 according to an embodiment of the disclosure. The first communication device 700 may include a receiving unit 701, a processing unit 702, and a sending unit 703. The receiving unit 701 is configured to receive first task information. The processing unit 702 is configured to transform the first task information into second task information. The sending unit 703 is configured to send the second task information.

In an implementation, the first task information and/or the second task information indicates a parameter of a task to be executed by a target node.

In an implementation, the parameter of the task to be executed by the target node include at least one of the following:
content of the task;
a period of the task;
a reporting manner of an execution result;
a control parameter of the execution result; or
an execution range of the task.

In an implementation, the target node includes a tag node.

In an implementation, the first communication device is a transformer node. The receiving unit 701 is further configured to receive the first task information from an application node, where the first task information is application-layer information.

In an implementation, the sending unit 703 is further configured to send the second task information to the target node, where the second task information is NAS information obtained by the transformer node by transforming the first task information from the application-layer information.

In an implementation, the receiving unit 701 is further configured to receive a first execution result, where the first execution result is a result obtained by the target node by executing a task based on the second task information. The processing unit 702 is further configured to transform the first execution result into a second execution result. The sending unit is further configured to send the second execution result.

In an implementation, the first communication device is the transformer node. The receiving unit 701 is further configured to receive the first execution result from the target node, where the first execution result is NAS information.

In an implementation, the first communication device is the transformer node. The sending unit 703 is further configured to send the second execution result to the application node through a communication network, where the second execution result is application-layer information obtained by the transformer node by transforming the first execution result from the NAS information.

In an implementation, application-layer information is transmitted between the transformer node and the application node via a TCP/IP, and NAS information is transmitted between the transformer node and the target node via an L1/L2 message.

In an implementation, the transformer node is on a reader node.

In an implementation, the first communication device is the transformer node. The sending unit 703 is further configured to send the second task information to a core network node, where the second task information is protocol-layer information obtained by the transformer node by transforming the first task information from the application-layer information. The second task information is transformed from the protocol-layer information into the NAS information by the core network node, and is sent to the target node through the reader node.

In an implementation, the receiving unit 701 is further configured to receive a second execution result, where the second execution result is obtained by transforming the first execution result. The first execution result is a result obtained by the target node by executing the task based on the second task information. The processing unit 702 is further configured to transform the second execution result into a third execution result. The sending unit 703 is further configured to send the third execution result.

In an implementation, the first communication device is the transformer node. The receiving unit 701 is further configured to receive the second execution result from the core network node, where the second execution result is protocol-layer information obtained by the core network node by transforming the first execution result from the NAS information.

In an implementation, the first communication device is the transformer node. The sending unit 703 is further configured to send the third execution result to the application node, where the third execution result is application-layer information obtained by the transformer node by transforming the second execution result from the protocol-layer information.

In an implementation, information interaction between the transformer node and the core network node is performed in a manner based on reference points under an SBA.

FIG. 8 is a schematic block diagram of a second communication device 800 according to an embodiment of the disclosure. The second communication device 800 may include a receiving unit 801, a processing unit 802, and a sending unit 803. The receiving unit 801 is configured to receive second task information, where the second task information is obtained by transforming based on first task information. The processing unit 802 is configured to transform the second task information into third task information. The sending unit 803 is configured to send the third task information.

In an implementation, at least one of the first task information, the second task information, and the third task information indicates a parameter of a task to be executed by a target node.

In an implementation, the parameter of the task to be executed by the target node include at least one of the following:
content of the task;
a period of the task;
a reporting manner of an execution result;
a control parameter of the execution result; or
an execution range of the task.

In an implementation, the target node includes a tag node.

In an implementation, the second communication device is a core network node. The receiving unit 801 is further configured to receive the second task information from a transformer node, where the second task information is protocol-layer information obtained by the transformer node by transforming the first task information from an application node, and the first task information is application-layer information.

In an implementation, the second communication device is the core network node. The sending unit 803 is further configured to send the third task information to the target node through a reader node, where the third task information is NAS information.

In an implementation, the receiving unit 801 is further configured to receive a first execution result. The processing unit 802 is further configured to transform the first execution result into a second execution result. The sending unit 803 is further configured to send the second execution result.

In an implementation, the second communication device is the core network node. The receiving unit 801 is further configured to receive the first execution result from the target node through the reader node, where the first execution result is NAS information.

In an implementation, the second communication device is the core network node. The sending unit 803 is further configured to send the second execution result to the transformer node, where the second execution result is protocol-layer information obtained by the core network node by transforming the first execution result from the NAS information. The second execution result is transformed from the protocol-layer information into application-layer information by the transformer node, and is sent to the application node.

In an implementation, information interaction between the transformer node and the core network node is performed in a manner based on reference points under an SBA.

In an implementation, NAS information is transmitted between the core network node and the reader node via an NGAP, and NAS information is transmitted between the reader node and the target node via an L1/L2 message.

The communication devices 700 and 800 according to embodiments of the disclosure can implement corresponding functions of the first node and the second node in the foregoing method embodiments. For the processes, functions, implementation manners, and beneficial effects corresponding to each module (sub-module, unit, component, etc.) in the communication devices 700 and 800, reference can be made to the corresponding descriptions in the above method embodiments, and details are not repeated herein. It should be noted that the functions described for each module (sub-module, unit, component, etc.) in the communication devices 700 and 800 of embodiments of the disclosure can be implemented by different modules (sub-modules, units, components, etc.) or by the same module (sub-module, unit, component, etc.).

In an application scenario, a task issuing and/or data reporting manner may be introduced into an A-IoT system, which specifically includes one or more of the following.
1. An logic node for information bidirectional-transformation (may be referred to as a transformer node for short) is introduced, which is used for transforming information between standard protocols respectively supported by an Internet App and a tag.
2. The transformer node may be set between the A-IoT App (application node) and a core network (core network node). The transformer node sends transformed information to the core network, and then the core network establishes a logical conversation process with the tag.
3. Information interaction between the transformer node and the core network is performed in a manner based on reference points under an SBA.
4. The transformer node is set between the core network and the tag, in which case a conversation process is established between the transformer node and the tag.
5. The transformer node may be set on a reader node, such as a reader. The reader may be a user equipment (UE), a base station, or the like.
6. For an inventory service, in a first manner, a downlink task of the core network may be issued via a protocol between the core network and the reader, such as an NGAP. After receiving the task, the reader triggers an inventory process via an L2/L1 message. Uplink data may be sent to the core network via an NAS message, and then be sent to a third-party App through the transformer node.
7. For the inventory service, in a second manner, after receiving an application-layer task, the reader triggers an inventory process via the L2/L1 message. The uplink data is sent to the reader via the NAS message, and then is sent to the third-party App.
8. The task includes at least executable content of the task.
9. The task may further include, but is not limited to, a period of the task, a reporting control parameter of an execution result (such as a period, etc.), and an execution range of the task (such as a range of the reader, a range of the tag, etc.).

### Example 1: Remote transformer-based method

As illustrated in FIGS. 9A and 9B, assumes there is an intermediate transformer node is set between a node where a third-party A-IoT App is located and a 3GPP core network for an A-IoT system. The function of the intermediate transformer node includes mutually transforming between application-layer information and protocol-layer information (XF) between the A-IoT App and the 3GPP A-IoT core network node.

In the downlink direction, for example, the A-IoT App issues a task to a tag node. The task is first sent to the transformer node in FIG. 9A, and the transformer node transforms the application-layer information into information that can be communicated between XF nodes. The core network node further transforms the information in the XF protocol into NAS information that is supported by the tag node and can be used for end-to-end communication with the core network. Alternatively, the destination of the task is the core network, and then the core network notifies the reader to perform a related operation via the NGAP protocol. For example, the related operation may be a inventory service,.

After the tag node executes the task according to the received information, if there is information to be reported, the information may be transformed and transmitted to the node where the A-IoT App is located in a reverse direction of the above information transformation path.

### Example 2: Local transformer-based method

As illustrated in FIGS. 10A and 10B, in this method, a node (such as a smart phone or a base station) that directly communicates with a tag node may have a complete A-IoT App application. The node may be a reader (which may be understood as a local transformer node). The node is responsible for internal information transformation between the A-IoT application-layer and a high-layer protocol (such as NAS) that is supported between the node and the tag node. For example, in a downlink direction, an application-layer task is directly transformed into NAS information, and then the reader sends the NAS information to the tag node. After the tag node executes the task according to the task description, information to be reported is transformed into NAS information and sent to the reader. The reader performs internal transformation on the information, and then sends the information through the A-IoT App to a node where a remote A-IoT App is located. The destination of the task may also be the reader. In this case, after interpreting the parameter of the task such as the content of the task in the downlink direction, the reader completes the task via an L2/L1 protocol. For example, for an inventory task, the reader triggers a tag to read information to be inventoried via the L2 message, and then the tag sends the information to the reader via the NAS information. The reader transforms the received information into A-IoT app information and communicates with a third-party server.

### Example 3: Task description

A task involved in example 1 and example 2 may include the following parameter:
(1) a period of task execution (optional);
(2) specific content of the task;
(3) a reporting manner and a control parameter of an execution result, such as a period, a threshold, etc. (optional);
(4) an execution range of the task (optional).

Table 1 illustrates examples of task description. In Task 1, Task 2, Task 3 and Task 6, the part before the first semicolon in the task description is empty, which indicates that there is no period parameter and these tasks are single-execution tasks.

**Table 1**

| Task Number | Task Description | Task Interpretation | Remarks |
|---|---|---|---|
| 1 | { ; turn on a light; location area 1} | single-execution task (no period parameter), no reporting required | applicable to a command use case, such as street lamp control in a park |
| 2 | { ; send a positioning signal for 10ms; reader1 and reader2} | single-execution task (no period parameter), no reporting required | applicable to a tracking use case, such as for positioning |
| 3 | { ; measure the patient's blood pressure; report immediately; a tag in an inpatient area} | single-execution task, requiring immediate reporting of a measurement result | more suitable for a sensor use case, such as for remote medical care |
| 4 | {5 minutes; measure temperature; periodic reporting (5 minutes); a tag in a garden} | periodically executed and reported task | more suitable for a sensor use case; |
| | | | for a type A/B tag, a network needs to trigger reporting periodically; |
| | | | for a type C tag, active reporting |
| 5 | {30 minutes; measure humidity; report when humidity is outside [30%, 80%]; a tag in a farm} | periodically executed task, determining whether to report based on the measurement result and the given trigger condition | more suitable for a sensor use case; |
| | | | for a type A/B tag, a network needs to periodically check whether there is data to report; |
| | | | more suitable for a type C tag, active reporting is possible |
| 6 | { ; inventory; ; a tag of an alcohol product in a supermarket} | inventory the alcohol product in the supermarket, requiring timely reporting the result | more suitable for an inventory use case |

The two A-IoT task transmission manners in the above examples enable a third-party user of the A-IoT system to transmit the task and report the data with tags that cannot directly access the Internet through the Internet.

FIG. 11 is a schematic block diagram of a communication device 1100 according to an embodiment of the disclosure. The communication device 1100 includes a processor 1110, and the processor 1110 can invoke and execute computer programs from a memory to cause the communication device 1100 to implement the method in the embodiments of the disclosure.

In an implementation, the communication device 1100 may further include a memory 1120. The processor 1110 can invoke and execute the computer program from the memory 1120 to cause the communication device 1100 to implement the method in the embodiments of the disclosure. The memory 1120 may be an independent component separate from the processor 1110, or may be integrated into the processor 1110.

In an implementation, the communication device 1100 may further include a transceiver 1130, and the processor 1110 can control the transceiver 1130 to communicate with other devices. Specifically, the communication device 1100 can transmit information or data to other device, or receive information or data transmitted by other devices. The transceiver 1130 may include a transmitter and a receiver. The transceiver 1130 may further include antennas, and the number of antennas may be one or more.

In an implementation, the communication device 1100 may be a first communication device or a second communication device in the embodiments of the disclosure, and the communication device 1100 can implement the corresponding processes performed by the first communication device or the second communication device in each method of the embodiments of the disclosure, which will not be repeated herein for the sake of brevity.

FIG. 12 is a schematic structural diagram of a chip 1200 according to embodiments of the disclosure. The chip 1200 includes a processor 1210, and the processor 1210 can invoke and execute a computer program from a memory to implement the method in the embodiments of the disclosure.

In an implementation, the chip 1200 may further include a memory 1220. The processor 1210 can invoke and execute the computer program from the memory 1220 to implement the method performed by a first network element or a target node in the embodiments of the disclosure. The memory 1220 may be an independent component separate from the processor 1210, or may be integrated into the processor 1210.

In an implementation, the chip 1200 may further include an input interface 1230. The processor 1210 can control the input interface 1230 to communicate with other devices or chips. Specifically, the input interface 1230 can obtain information or data transmitted by other devices or chips.

In an implementation, the chip 1200 may further include an output interface 1240. The processor 1210 can control the output interface 1240 to communicate with other devices or chips. Specifically, the output interface 1240 can output information or data to other devices or chips.

In an implementation, the chip can be applied to a network device in the embodiment of the disclosure, and the chip can implement the corresponding processes performed by the network device in each method of the embodiments of the disclosure, which will not be repeated herein for the sake of brevity.

In an implementation, the chip can be applied to a first communication device or a second communication device in the embodiments of the disclosure, and the chip can implement the corresponding processes performed by the first communication device or the second communication device in each method of the embodiments of the disclosure, which will not be repeated herein for the sake of brevity.

The chip(s) applied to the first communication device or applied to the second communication device may be the same chip or different chips.

It should be understood that the chip in embodiments of the disclosure may also be referred to as a system-on-chip (SOC).

The processor described above may be a general-purpose processor, a digital signal processor (DSP), a field programmable gate array (FPGA), an application specific integrated circuit (ASIC), or other programmable logic devices, transistor logic devices, discrete hardware components, etc. The general purpose processor mentioned above may be a microprocessor, or the processor may be any conventional processor or the like.

The memory mentioned above may be a volatile memory or a non-volatile memory, or may include both the volatile memory and the non-volatile memory. The non-volatile memory may be a read-only memory (ROM), a programmable ROM (PROM), an erasable PROM (EPROM), an electrically EPROM (EEPROM), or a flash memory. The volatile memory can be a random access memory (RAM).

It should be understood that, the memory above is intended for illustration rather than limitation. For example, the memory in embodiments of the disclosure may also be a static RAM (SRAM), a dynamic RAM (DRAM), a synchronous DRAM (SDRAM), a double data rate SDRAM (DDR SDRAM), an enhanced SDRAM (ESDRAM), a synch link DRAM (SLDRAM), a direct rambus RAM (DR RAM), etc. In other words, the memory in embodiments of the disclosure is intended to include, but is not limited to, these and any other suitable types of memory.

FIG. 13 illustrates a schematic block diagram of a communication system 1300 according to an embodiment of the disclosure. The communication system 1300 includes a first communication device 1310 and a second communication device 1320.

The first communication device 1310 can be a first node, which is configured to receive first task information, transform the first task information into second task information, and send the second task information.

In an implementation, the second communication device 1320 can be a second node, which is configured to receive the second task information, transform the second task information into third task information, and send the third task information.

The first communication device 1310 can be configured to implement corresponding functions implemented by a transformer node in the foregoing methods, and the second communication device 1320 can be configured to implement corresponding functions implemented by a core network node in the foregoing methods, which will not be repeated herein for the sake of brevity.

All or some of the above embodiments can be implemented through software, hardware, firmware, or any other combination thereof. When implemented by software, all or some the above embodiments can be implemented in the form of a computer program product. The computer program product includes one or more computer instructions. When the computer instructions are applied and executed on a computer, all or some the operations or functions of the embodiments of the disclosure are performed. The computer can be a general-purpose computer, a special-purpose computer, a computer network, or other programmable apparatuses. The computer instruction can be stored in a computer-readable storage medium, or transmitted from one computer-readable storage medium to another computer-readable storage medium. For example, the computer instruction can be transmitted from one website, computer, server, or data center to another website, computer, server, or data center in a wired manner or in a wireless manner. Examples of the wired manner can be a coaxial cable, an optical fiber, a digital subscriber line (DSL), etc. The wireless manner can be, for example, infrared, wireless, microwave, etc. The computer-readable storage medium can be any computer accessible usable-medium or a data storage device such as a server, a data center, or the like which integrates one or more usable media. The usable medium can be a magnetic medium (such as a soft disk, a hard disk, or a magnetic tape), an optical medium (such as a digital video disc (DVD)), a semiconductor medium (such as a solid state disk (SSD)), etc.

It should also be understood that, in various method embodiments of the disclosure, the magnitude of a sequence number of each of the foregoing processes does not mean an execution order, and an execution order of each process should be determined according to a function and an internal logic of the process, which shall not constitute any limitation to an implementation process of embodiments of the disclosure.

It will be evident to those skilled in the art that, for the sake of convenience and brevity, in terms of the specific working processes of the foregoing systems, apparatuses, and units, reference can be made to the corresponding processes in the foregoing method embodiments, which will not be described in detail again herein.

The foregoing elaborations are merely implementations of the disclosure, but are not intended to limit the protection scope of the disclosure. Any variation or replacement easily thought of by those skilled in the art within the technical scope disclosed in the disclosure shall belong to the protection scope of the disclosure. Therefore, the protection scope of the disclosure shall be subject to the protection scope of the claims.

## Claims

1. A communication method, comprising:
receiving, by a first node, first task information;
transforming, by the first node, the first task information into second task information; and
sending, by the first node, the second task information.

2. The method of claim 1, wherein the first task information and/or the second task information indicates a parameter of a task to be executed by a target node.

3. The method of claim 2, wherein the parameter of the task to be executed by the target node comprise at least one of:
content of the task;
a period of the task;
a reporting manner of an execution result;
a control parameter of the execution result; or
an execution range of the task.

4. The method of claim 2 or 3, wherein the target node comprises a tag node.

5. The method of any one of claims 2 to 4, wherein the first node is a transformer node, and receiving, by the first node, the first task information comprises:
receiving, by the transformer node, the first task information from an application node, wherein the first task information is application-layer information.

6. The method of claim 5, wherein sending, by the first node, the second task information comprises:
sending, by the transformer node, the second task information to the target node, wherein the second task information is non-access stratum (NAS) information obtained by the transformer node by transforming the first task information from the application-layer information.

7. The method of claim 5 or 6, wherein the method further comprises:
receiving, by the first node, a first execution result, wherein the first execution result is a result obtained by the target node by executing a task based on the second task information;
transforming, by the first node, the first execution result into a second execution result; and
sending, by the first node, the second execution result.

8. The method of claim 7, wherein receiving, by the first node, the first execution result comprises:
receiving, by the transformer node, the first execution result from the target node, wherein the first execution result is NAS information.

9. The method of claim 8, wherein sending, by the first node, the second execution result comprises:
sending, by the transformer node, the second execution result to the application node through a communication network, wherein the second execution result is application-layer information obtained by the transformer node by transforming the first execution result from the NAS information.

10. The method of any one of claims 5, 6 and 8, wherein application-layer information is transmitted between the transformer node and the application node via a transmission control protocol/internet protocol (TCP/IP), and NAS information is transmitted between the transformer node and the target node via a layer 1/layer 2 (L1/L2) message.

11. The method of any one of claims 5, 6, 8, 9 and 10, wherein the transformer node is on a reader node.

12. The method of claim 5, wherein sending, by the first node, the second task information comprises:
sending, by the transformer node, the second task information to a core network node, wherein the second task information is protocol-layer information obtained by the transformer node by transforming the first task information from the application-layer information, wherein the second task information is transformed by the core network node from the protocol-layer information into NAS information, and the NAS information is sent by the core network node to the target node through a reader node.

13. The method of claim 12, wherein the method further comprises:
receiving, by the first node, a second execution result, wherein the second execution result is obtained by transforming based on a first execution result, and the first execution result is a result obtained by the target node by executing a task based on the second task information;
transforming, by the first node, the second execution result into a third execution result; and
sending, by the first node, the third execution result.

14. The method of claim 13, wherein receiving, by the first node, the second execution result comprises:
receiving, by the transformer node, the second execution result from the core network node, wherein the second execution result is protocol-layer information obtained by the core network node by transforming the first execution result from NAS information.

15. The method of claim 14, wherein sending, by the first node, the third execution result comprises:
sending, by the transformer node, the third execution result to the application node, wherein the third execution result is application-layer information obtained by the transformer node by transforming the second execution result from the protocol-layer information.

16. The method of any one of claims 13 to 15, wherein information interaction between the transformer node and the core network node is performed in a manner based on reference points under a service-based architecture (SBA).

17. A communication method, comprising:
receiving, by a second node, second task information, wherein the second task information is obtained by transforming first task information;
transforming, by the second node, the second task information into third task information; and
sending, by the second node, the third task information.

18. The method of claim 17, wherein at least one of the first task information, the second task information, or the third task information indicates a parameter of a task to be executed by a target node.

19. The method of claim 18, wherein the parameter of the task to be executed by the target node comprise at least one of:
content of the task;
a period of the task;
a reporting manner of an execution result;
a control parameter of the execution result; or
an execution range of the task.

20. The method of claim 18 or 19, wherein the target node comprises a tag node.

21. The method of any one of claims 17 to 20, wherein the second node is a core network node, and receiving, by the second node, the second task information comprises:
receiving, by the core network node, the second task information from a transformer node, wherein the second task information is protocol-layer information obtained by the transformer node by transforming the first task information from an application node, and the first task information is application-layer information.

22. The method of claim 21, wherein sending, by the second node, the third task information comprises:
sending, by the core network node, the third task information to a target node through a reader node, wherein the third task information is non-access stratum (NAS) information.

23. The method of any one of claims 17 to 22, wherein the method further comprises:
receiving, by the second node, a first execution result;
transforming, by the second node, the first execution result into a second execution result; and
sending, by the second node, the second execution result.

24. The method of claim 23, wherein the second node is a core network node, and receiving, by the second node, the first execution result comprises:
receiving, by the core network node, the first execution result from a target node through a reader node, wherein the first execution result is NAS information.

25. The method of claim 24, wherein sending, by the second node, the second execution result comprises:
sending, by the core network node, the second execution result to a transformer node, wherein the second execution result is protocol-layer information obtained by the core network node by transforming the first execution result from the NAS information, the second execution result is transformed by the transformer node from the protocol-layer information into application-layer information, and the application-layer information is sent by the transformer node to an application node.

26. The method of any one of claims 21, 22 and 25, wherein information interaction between the transformer node and the core network node is performed in a manner based on reference points under a service-based architecture (SBA).

27. The method of any one of claims 22, 24 and 25, wherein NAS information is transmitted between the transformer node and the reader node via a next generation application protocol (NGAP), and NAS information is transmitted between the reader node and the target node via a layer 1/layer 2 (L1/L2) message.

28. A first communication device, comprising:
a receiving unit configured to receive first task information;
a processing unit configured to transform the first task information into second task information; and
a sending unit configured to send the second task information.

29. The first communication device of claim 28, wherein the first task information and/or the second task information indicates a parameter of a task to be executed by a target node.

30. The first communication device of claim 29, wherein the parameter of the task to be executed by the target node comprise at least one of:
content of the task;
a period of the task;
a reporting manner of an execution result;
a control parameter of the execution result; or
an execution range of the task.

31. The first communication device of claim 29 or 30, wherein the target node comprises a tag node.

32. The first communication device of any one of claims 29 to 31, wherein the first communication device is a transformer node, and the receiving unit is further configured to: receive the first task information from an application node, wherein the first task information is application-layer information.

33. The first communication device of claim 32, wherein the sending unit is further configured to send the second task information to the target node, wherein the second task information is non-access stratum (NAS) information obtained by the transformer node by transforming the first task information from the application-layer information.

34. The first communication device of claim 32 or 33, wherein
the receiving unit is further configured to receive a first execution result, and the first execution result is a result obtained by the target node by executing a task based on the second task information;
the processing unit is further configured to transform the first execution result into a second execution result; and
the sending unit is further configured to send the second execution result.

35. The first communication device of claim 34, wherein the receiving unit is further configured to receive the first execution result from the target node, and the first execution result is NAS information.

36. The first communication device of claim 35, wherein the first communication device is the transformer node, and the sending unit is further configured to send the second execution result to the application node through a communication network, wherein the second execution result is application-layer information obtained by the transformer node by transforming the first execution result from the NAS information.

37. The first communication device of any one of claims 32, 33 and 35, wherein application-layer information is transmitted between the transformer node and the application node via a transmission control protocol/internet protocol (TCP/IP), and NAS information is transmitted between the transformer node and the target node via a layer 1/layer 2 (L1/L2) message.

38. The first communication device of any one of claims 32, 33, 35, 36 and 37, wherein the transformer node is on a reader node.

39. The first communication device of claim 32, wherein the sending unit is further configured to send the second task information to a core network node, wherein the second task information is protocol-layer information obtained by the transformer node by transforming the first task information from the application-layer information, wherein the second task information is transformed by the core network node from the protocol-layer information into NAS information, and the NAS information is sent by the core network node to the target node through a reader node.

40. The first communication device of claim 39, wherein
the receiving unit is further configured to receive a second execution result, the second execution result is obtained by transforming based on a first execution result, and the first execution result is a result obtained by the target node by executing a task based on the second task information;
the processing unit is further configured to transform the second execution result into a third execution result; and
the sending unit is further configured to send the third execution result.

41. The first communication device of claim 40, wherein the first communication device is the transformer node, and the receiving unit is further configured to receive the second execution result from the core network node, wherein the second execution result is protocol-layer information obtained by the core network node by transforming the first execution result from NAS information.

42. The first communication device of claim 41, wherein the first communication device is the transformer node, and the sending unit is further configured to send the third execution result to the application node, wherein the third execution result is application-layer information obtained by the transformer node by transforming the second execution result from the protocol-layer information.

43. The first communication device of any one of claims 40 to 42, wherein information interaction between the transformer node and the core network node is performed in a manner based on reference points under a service-based architecture (SBA).

44. A second communication device, comprising:
a receiving unit configured to receive second task information, wherein the second task information is obtained by transforming first task information;
a processing unit configured to transform the second task information into third task information; and
a sending unit configured to send the third task information.

45. The second communication device of claim 44, wherein at least one of the first task information, the second task information, or the third task information indicates a parameter of a task to be executed by a target node.

46. The second communication device of claim 45, wherein the parameter of the task to be executed by the target node comprise at least one of:
content of the task;
a period of the task;
a reporting manner of an execution result;
a control parameter of the execution result; or
an execution range of the task.

47. The second communication device of claim 45 or 46, wherein the target node comprises a tag node.

48. The second communication device of any one of claims 44 to 47, wherein the second communication device is a core network node, and the receiving unit is further configured to receive the second task information from a transformer node, wherein the second task information is protocol-layer information obtained by the transformer node by transforming the first task information from an application node, and the first task information is application-layer information.

49. The second communication device of claim 48, wherein the second communication device is the core network node, and the sending unit is further configured send the third task information to a target node through a reader node, wherein the third task information is non-access stratum (NAS) information.

50. The second communication device of any one of claims 44 to 49, wherein
the receiving unit is further configured to receive a first execution result;
the processing unit is further configured to transform the first execution result into a second execution result; and
the sending unit is further configured to send the second execution result.

51. The second communication device of claim 50, wherein the second communication device is a core network node, and the receiving unit is further configured to receive the first execution result from a target node through a reader node, wherein the first execution result is NAS information.

52. The second communication device of claim 51, wherein the communication device is the core network device, and the sending unit is further configured to send the second execution result to a transformer node, wherein the second execution result is protocol-layer information obtained by the core network node by transforming the first execution result from the NAS information, the second execution result is transformed by the transformer node from the protocol-layer information into application-layer information, and the application-layer information is sent by the transformer node to an application node.

53. The second communication device of any one of claims 48, 49 and 52, wherein information interaction between the transformer node and the core network node is performed in a manner based on reference points under a service-based architecture (SBA).

54. The second communication device of any one of claims 49, 51 and 52, wherein NAS information is transmitted between the transformer node and the reader node via a next generation application protocol (NGAP), and NAS information is transmitted between the reader node and the target node via a layer 1/layer 2 (L1/L2) message.

55. A communication device, comprising:
a transceiver configured to communicate with another device;
a memory configured to store a computer program; and
a processor configured to invoke and execute the computer program stored in the memory, to cause the communication device to perform the method of any one of claims 1 to 27.

56. A chip, comprising a processor configured to invoke and execute a computer program stored in a memory, to cause a device equipped with the chip to perform the method of any one of claims 1 to 27.

57. A computer-readable storage medium configured to store a computer program which, when executed by a device, causes the device to perform the method of any one of claims 1 to 27.

58. A computer program product comprising computer program instructions which are executable by a computer to perform the method of any one of claims 1 to 27.

59. A computer program being executable by a computer to perform the method of any one of claims 1 to 27.
